Europäisches Patentamt

European Patent Office

Office européen des brevets

(11) Numéro de publication: **0 104 110**
**B1**

(12) **FASCICULE DE BREVET EUROPEEN**

(45) Date de publication du fascicule du brevet: **11.05.88**

(51) Int. Cl.⁴: **B 62 M 9/12**

(21) Numéro de dépôt: **83401745.1**

(22) Date de dépôt: **02.09.83**

(54) Dérailleur de pédalier perfectionné pour bicyclette.

(30) Priorité: **15.09.82 FR 8215595**

(43) Date de publication de la demande:
**28.03.84 Bulletin 84/13**

(45) Mention de la délivrance du brevet:
**11.05.88 Bulletin 88/19**

(84) Etats contractants désignés:
**BE DE GB IT LU NL**

(56) Documents cités:
**FR-A- 885 077**
**FR-A-1 026 010**
**FR-A-2 401 824**
**FR-A-2 507 993**
**US-A-3 890 847**

(73) Titulaire: **SACHS-HURET S.A.**
**60, Avenue Félix Faure**
**F-92000 Nanterre (FR)**

(72) Inventeur: **Coue, Maurice**
**6 résidence du Vieux Puits**
**F-78810 Feucherolles (FR)**

(74) Mandataire: **Bressand, Georges et al**
**c/o CABINET LAVOIX 2 Place d'Estienne d'Orves**
**F-75441 Paris Cedex 09 (FR)**

Courier Press, Leamington Spa, England.

### Description

La présente invention concerne les dérailleurs utilisés sur les chaînes de cycles et en particulier un dérailleur de chaîne pour plateaux de pédalier.

On sait qu'un dérailleur de pédalier comprend habituellement une chape mobile de guidage et de déplacement de la chaîne qui est articulée sur un support destiné à être fixé au cadre de la bicyclette.

Habituellement, cette chape est articulée sur le support au moyen de deux biellettes parallèles, de telle sorte que l'ensemble constitue un parallélogramme pour déplacer la chape à peu près transversalement par rapport à la chaîne.

Dans certains mécanismes de dérailleurs, la chape est adaptée pour se déplacer également obliquement par rapport à la chaîne. C'est ainsi que le brevet FR—A—1.026.010 décrit un agencement dans lequel la chape est portée par une tige montée mobile dans une rainure orientée obliquement par rapport à l'axe des plateaux. Cependant dans cet agencement antérieur, la chape se déplace légèrement vers l'arrière lorsqu'elle fait passer la chaîne d'un plateau de petit diamètre à un plateau de plus grand diamètre, ce qui ne peut que rendre plus difficile ce passage.

Or, dans le cas du dérailleur de pédalier, le passage de la chaîne du petit plateau au grand peut présenter des difficultés en raison de la différence entre les diamètres des plateaux qui est habituellement plus importante que les différences de diamètre des pignons de la roue arrière, la chaîne devant être déplacée radialement par rapport aux plateaux sur une distance relativement importante.

L'invention a pour but de réaliser un dispositif d'articulation de la chape d'un dérailleur de pédalier sur son support, adapté pour faciliter la montée de la chaîne d'un plateau vers un plateau plus grand.

L'invention a pour objet à cet effet un dérailleur de pédalier pour bicyclette comportant une chape de guidage et de déplacement de la chaîne d'un plateau à un autre, cette chape étant montée au moyen d'un mécanisme déformable sur un support fixé sur le cadre de la bicyclette, et dans lequel ladite chape se déplace obliquement par rapport à la chaîne, caractérisé en ce qu'il comprend des moyens pour déplacer la chape en translation suivant un mouvement combiné oblique montant et avançant, lorsque le dérailleur est actionné pour faire passer la chaîne d'un plateau à un plateau de plus grand diamètre.

Suivant une autre caractéristique de l'invention, le mécanisme étant un parallélogramme articulé, lesdits moyens pour déplacer la chape comprennent au moins un bras oblique, solidaire du support, incliné de bas en haut vers l'extérieur par rapport à un plan vertical contenant l'axe longitudinal de la bicyclette, sur lequel sont articulées deux biellettes constituant ledit parallélogramme avec le bras et la chape, de manière que lesdites biellettes pivotent dans un plan également incliné parallèle audit bras.

De préférence, dans un dérailleur à plus de deux plateaux, ledit bras est également incliné vers l'avant afin de dégager une course suffisante pour la chape.

D'autres caractéristiques et avantages de l'invention apparaitront au cours de la description qui va suivre, donnée uniquement à titre d'exemple et faite en référence aux dessins annexés, sur lesquels:

—la Fig. 1 est une vue en plan de dessus montrant le bras de support et la chape articulée sur celui-ci, la chape étant en position avancée haute au-dessus du grand plateau du pédalier;

—la Fig. 2 est une vue analogue à celle de la Fig. 1 dans laquelle la chape est représentée en position reculée basse au-dessus du petit plateau d'un pédalier à deux plateaux;

—la Fig. 3 est une vue en élévation d'arrière du support et de la chape montrant les positions haute et basse de celle-ci;

—la Fig. 4 est une vue en élévation latérale de la chape montrant les moyens d'articulation des biellettes.

En se référant aux dessins, le dérailleur de pédalier comprend une chape 1 de guidage et de déplacement de la chaîne C, articulée au moyen d'un dispositif d'articulation désigné dans son ensemble par la référence 2 sur un bras 3 solidaire d'un support 4.

La chape 1 comporte de façon connue deux ailes 1ᵃ, 1ᵇ, l'aile intérieure 1ᵃ ayant une longueur un peu supérieure à l'aile extérieure 1ᵇ et les ailes étant reliées entre elles par une partie intermédiaire 5 et par une entretoise 6, reliant les extrémités arrière des ailes 1ᵃ, 1ᵇ.

Les ailes 1ᵃ, 1ᵇ de la chape s'étendent à peu près verticalement vers le bas de part et d'autre de la chaîne C.

La partie intermédiaire 5 de la chape présente une surface plane inclinée percée d'un trou 7 et l'aile 1ᵃ présente une patte repliée 8 inclinée par rapport à l'aile 1ᵃ d'un même angle que la partie intermédiaire 5. Une seconde patte 9 est découpée dans l'aile 1ᵃ et rabattue suivant le même angle que la patte 8, les pattes 8 et 9 étant percées chacune d'un trou 10 et ces trous étant alignés.

La chape 1 est articulée sur le bras 3 au moyen du dispositif d'articulation 2 qui est, de façon connue, constitué par un parallélogramme déformable.

Deux côtés opposés de ce parallélogramme sont constitués par deux biellettes 11, 12, une extrémité de la biellette 11 étant articulée au moyen d'un axe 13 dans le trou 7 de la partie intermédiaire 5 et la biellette 12 étant articulée par une extrémité au moyen d'un axe 14 dans les trous 10 des pattes 8 et 9. Les deux biellettes sont parallèles entre elles et aux surfaces de la partie intermédiaire 5 et de la patte 8 et leurs extrémités opposées à la chape sont articulées au moyen d'axes 15, 16 respectivement sur le bras 3, sur des surfaces de celui-ci également inclinées par rapport aux ailes de la chape.

Suivant l'exemple représente et en raison de la forme de la chape 1 dans laquelle la surface de la partie intermédiaire 5 et la surface de la patte 8 sont décalées, les biellettes 11 et 12 sont articulées sur des surfaces étagées de la face inférieure de la patte 3.

De préférence, un ressort de rappel 17 entoure l'axe 14 d'articulation de la biellette 12 sur la chape 1 entre les pattes 8 et 9 de celle-ci, l'une des extrémités du ressort 17 étant ancrée dans la patte 9 tandis que son extrémité opposée est en appui contre un prolongement 18 de l'axe d'articulation 16, le ressort étant précontraint de façon à rappeler la chape 1 élastiquement comme connu en soi.

Les deux autres côtés opposés du parallélogramme sont constitués d'une part par la chape 1 et d'autre part par le bras 3.

A son extrémité opposée à la chape, le bras 3 est solidaire d'un support convenable 4 adapté pour être fixé sur un tube du cadre d'une bicyclette et qui, suivant l'exemple représenté, est formé de deux parties semi-circulaires 4ᵃ, 4ᵇ articulées l'une sur l'autre et pouvant être serrées autour du tube, de façon classique.

On comprend que grâce à l'inclinaison de la partie intermédiaire 5 et des pattes 8 et 9 de la chape, et à celle du bras 3, le parallélogramme est déformable dans un plan qui est également incliné et s'étend obliquement depuis le cadre, vers le haut et vers la chape, c'est-à-dire vers l'extérieur de la bicyclette, par rapport à un plan vertical contenant l'axe longitudinal de la bicyclette.

Des moyens sont prévus pour déformer le parallélogramme dans son plan et actionner le dérailleur. Ces moyens comprennent par exemple un prolongement 19 de la biellette 11 au-delà de l'axe 15 et portant un moyen 20 de fixation d'un câble souple 21 du type Bowden relié à une manette de commande du dérailleur (non représentée).

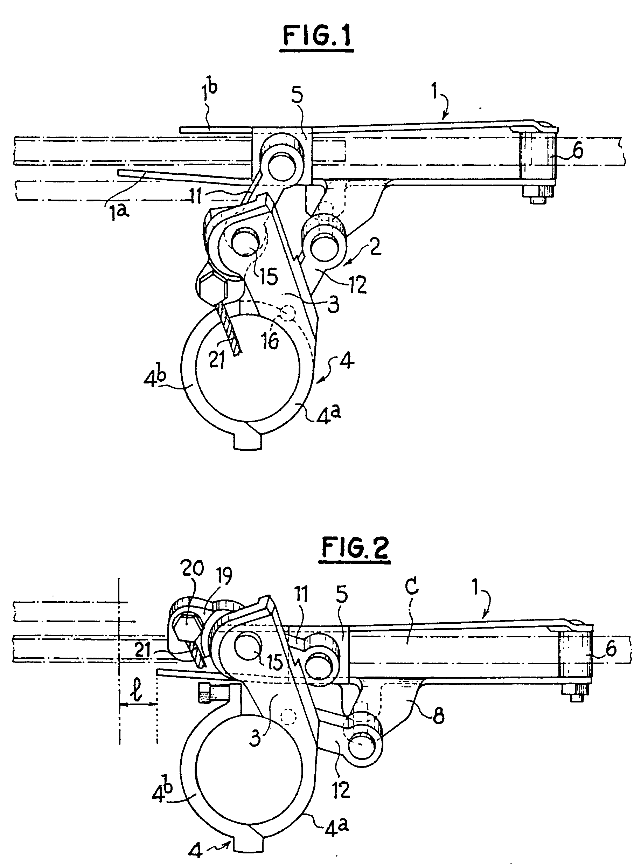

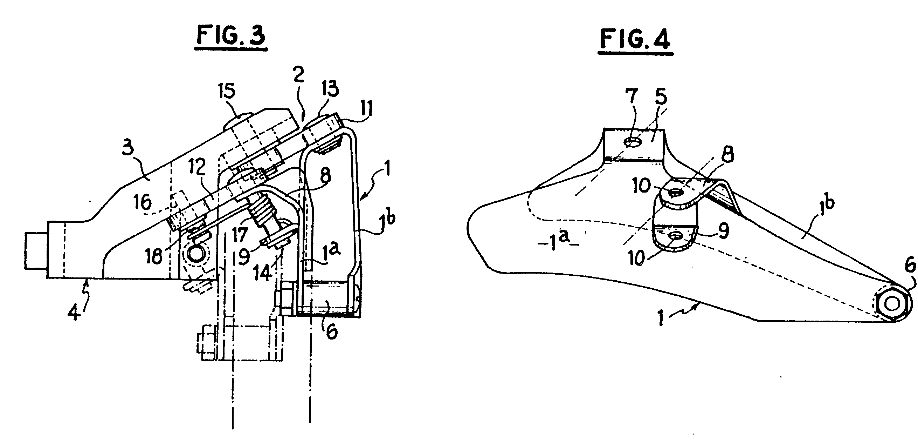

Lorsque la manette est actionnée, le câble 21 fait pivoter la biellette 11 entraînant la biellette 12 et, en raison de la géométrie du dispositif d'articulation, la chape 1 se déplace entre une position haute avancée représentée en traits pleins à la Fig. 3 et une position basse reculée représentée en traits mixtes à la Fig. 3. Le mouvement de la chape résulte de la position du parallélogramme déformable 2 et la différence entre les deux positions de la chape apparait à la comparaison des Fig. 1 et 2 et est représentée par *1* à la Fig. 2.

Grâce à cet agencement, on comprend que lorsque l'utilisateur veut faire monter la chaîne C de sa position sur le petit plateau (Fig. 2) sur le grand plateau (Fig. 1), l'aile intérieure 1ᵃ de la chape pousse la chaîne latéralement et obliquement en montant en accompagnant la chaîne dans son mouvement vers l'avant sur la distance *1*. Cette facilite considérablement le passage de la chaîne du petit plateau sur le grand.

On remarquera en considérant les Fig. 1 et 2 que l'axe du bras 3 est également incliné vers l'avant par rapport au plan vertical contenant l'axe longitudinal de la bicyclette en direction de l'extrémité avant de la chape. Cette inclinaison a pour but de dégager une course plus grande des biellettes dans le cas où le dérailleur est utilisé sur une bicyclette comportant plus de deux plateaux de pédalier.

On comprend cependant que le bras 3 peut également s'étendre sur le support 4 perpendiculairement aux ailes de la chape, l'essentiel étant son inclinaison de bas en haut vers l'extérieur.

Bien entendu, des variantes peuvent être apportées à ce mode de réalisation: en particulier un mécanisme d'articulation équivalent au parallélogramme peut être prévu, dans lequel l'une des biellettes est supprimée et remplacée par un doigt guidé dans une lumière ou par une came présentant un profil convenable, par exemple comme décrit dans le brevet FR—A—2,507,993.

## Revendications

1. Dérailleur de pédalier pour bicyclette comportant une chape de guidage et de déplacement de la chaîne, montée au moyen d'un mécanisme déformable sur un support fixé sur le cadre de la bicyclette, et dans lequel ladite chape se déplace obliquement par rapport à la chaîne, caractérisé en ce qu'il comprend des moyens (2, 3) pour déplacer la chape en translation suivant un mouvement combiné oblique montant et avançant, lorsque le dérailleur est actionné pour faire passer la chaîne d'un plateau à un plateau de plus grand diamètre.

2. Dérailleur de pédalier suivant la revendication 1, caractérisé en ce que lesdits moyens pour déplacer la chape comprennent au moins un bras oblique (3) solidaire d'un support (4) et incliné de bas en haut vers l'extérieur par rapport à un plan vertical contenant l'axe longitudinal de la bicyclette, et sur lequel sont articulées deux biellettes (11, 12) constituant ledit parallélogramme avec le bras et la chape, de manière que lesdites biellettes pivotent dans un plan également incliné parallèle au bras (3).

3. Dérailleur de pédalier suivant la revendication 2, caractérisé en ce que le bras (3) est également incliné vers l'avant par rapport audit plan vertical.

## Patentansprüche

1. Fahrrad-Kettenblattumwerfer
mit einem Gabelteil zum Führen und Versetzen der Kette, das mittels eines verformbaren Mechanismus an einem an dem Rahmen des Fahrrads befestigten Trägerteil montiert ist, in welchem das Gabelteil gegenüber der Kette schiefwinklig verschiebbar ist,
gekennzeichnet durch
Mittel (2, 3) zur translatorischen Verschiebung des Gabelteils in einer kombinierten, nach oben und nach vorn verlaufenden schiefen Bewegung, wenn der Kettenumwerfer betätigt wird, um die Kette von einem Kettenblatt zu einem Kettenblatt mit größerem Durchmesser zu führen.

2. Fahrrad-Kettenblattumwerfer nach Anspruch 1, dadurch gekennzeichnet, daß die Mittel zur Verschiebung des Gabelteils wenigstens einen schief angeordneten Arm (3) umfassen, der mit einem Trägerteil (4) fest verbunden ist und gegenüber einer die Längsachse des Fahrrads enthaltenden vertikalen Ebene in Richtung nach außen von unten nach oben geneigt ist, und an dem zwei Schwingarme (11, 12) angelenkt sind, die mit dem Arm und dem Gabelteil ein Parallelogramm bilden, so daß sie in einer ebenfalls geneigten und zu dem Arm (3) parallelen Ebene verschwenkt werden.

3. Fahrrad-Kettenblattumwerfer nach Anspruch 2, dadurch gekennzeichnet, daß der Arm (3) gegenüber der genannten vertikalen Ebene gleichermaßen nach vorn geneigt ist.

**Claims**

1. A pedal crank derailleur for a bicycle, comprising a fork element for guiding and shifting the chain which is mounted by means of a deformable mechanism on a support attached to the bicycle frame, wherein the fork element is moved at an inclination in relation to the chain, characterized in that it comprises means (2, 3) for shifting the fork element in translation in a combined inclined rising and forward movement when the derailleur is actuated to move the chain from one chain wheel to a chain wheel of larger diameter.

2. A pedal crank derailleur according to claim 1, characterized in that the means for shifting the fork element comprise at least one inclined arm (3) which is rigidly connected to a support (4) and is inclined downwardly and outwardly in relation to a vertical plane containing the longitudinal axis of the bicycle and to which two links (11, 12) are articulated to form a parallelogram with the arm and the fork element so that the links pivot in a plane which is also inclined in relation to the arm (3).

3. A pedal crack derailleur according to claim 2, characterized in that the arm (3) is also inclined forwardly in relation to said vertical plane.

## FIG.1

## FIG.2

FIG.4

FIG.3